# EUROPEAN PATENT SPECIFICATION

(11) **EP 0 887 380 B1**
(45) Date of publication and mention of the grant of the patent: **18.02.2004**
(21) Application number: 98660062.5
(22) Date of filing: 24.06.1998
(51) Int. Cl.: C08L 23/16, C08F 10/06, C08F 2/00, B01J 8/26, B01J 19/24

(54) **Process for preparing propylene copolymers**
Verfahren zur Herstellung von Propylencopolymeren
Procédé de préparation de copolymères de propylène

(30) Priority: 24.06.1997 FI 972727
(43) Date of publication of application: 30.12.1998
(73) Proprietor: Borealis Technology Oy, 06101 Porvoo (FI)
(72) Inventor: Harlin, Ali, 01450 Vantaa (FI); Aaltonen, Päivi, 02170 Espoo (FI); Alastalo, Kauno, 06400 Porvoo (FI); Kivelä, Jouni, 00550 Helsinki (FI); Korhonen, Esa, 06400 Porvoo (FI)
(74) Representative: Sundman, Christoffer

(56) References cited:
- EP-A- 0 517 183
- EP-A- 0 714 923
- WO-A-88/02376
- WO-A-96/18662
- WO-A-97/03124
- DE-A- 4 426 569
- US-A- 4 740 550
- US-A- 4 740 551

## Description

### Background of the Invention

### Field of the Invention

The present invention relates to the production of propylene based copolymers having a high comonomer content. In particular, the present invention concerns a process for preparing propylene copolymers in a reactor system comprising a combination of at least one slurry reactor and at least one gas phase reactor.

### Description of Related Art

The softness, impact resistance and heat sealing properties of propylene-based polymers can be increased by copolymerizing propylene with other olefins, such as ethylene, i-butylene and the like. Both bulk and gas phase processes have been employed. However, the comonomers used during polymerization cause swelling of the polymers in the polymerization medium of bulk processes. As a result, when swollen and soft polymer particles are flashed after polymerization, the morphology of the particles is destroyed and the bulk density of the powderized polymer becomes very low. At the same time amorphous material accumulates on the surfaces of the powder. Sticky low-density material agglomerates easily on the walls in the flash tank and causes problems during transportation. These problems increase when the proportion of comonomers increases.

For this reason, in the prior art the polymerization has mainly been carried out by using gas phase processes. These processes have thus been proposed for the production of sticky, but fluidizable products (EP 0 237 003) and for rubbery products, e.g. EPR and EPDM, (EP 0 614 917). In said processes, the gas velocity of the fluidized bed reactor is sufficient to cause the particles to separate and act as a fluid. However, the polymer in the fluid bed reactor is passed through essentially in a plug flow mode.

Gas phase processes are also favoured for high comonomer content products, cf. EP 0 674 991, EP 0 584 574, EP 0 605 001 and EP 0 704 464.

However, a problem relating to gas phase reactors is formed by their long residence times which means long transition times and possible productions losses. This is especially true for multireactor processes. Catalyst productivity in a gas phase process is low, which means higher catalyst and production costs.

In order to draw benefits from the different advantages of the slurry bulk and the gas phase reactors, respectively, some combinations of bulk and gas phase reactors for preparing copolymers of propylene have been suggested in the art. However, to date, none of the prior art processes meets the requirements for flexibility and low production costs dictated by the production of large varieties of polyolefin qualities using one and the same process configuration. In particular, recycling of rather large amounts of unreacted monomers to the slurry reactor, which is a typical feature of the known processes, impairs the loop reactor dynamics and slows up the transition to novel product qualities.

An improved two-stage process for polymerization of propylene in a combination of a loop reactor and a gas phase reactor is disclosed in US Patent No. 4,740,550. The main object of US 4,740,550 is to provide a process for preparing a block copolymer of high quality by feeding homopolymer with narrow residence time distribution to the block copolymerization stage. The process disclosed comprises the following stages: a first stage consisting of homopolymerization in a bulk loop reactor, a second stage homopolymerization in a gas phase reactor, fines removal in a cyclone between the first and second stage, and, finally, impact copolymerization in an additional gas phase reactor.

Before the polymerization product of the loop reactor is fed into the gas phase the fines fraction is removed and circulated back to the loop reactor. Together with the fines a part of the monomers from the gas phase reactor is recycled directly to the first stage loop reactor.

There are some considerable problems related to this prior art. Thus, if all fines are removed from the reactor outlet of the loop reactor and circulated back to the loop reactor, there is a considerable risk that the loop reactor eventually will be filled with inactive catalyst or slightly polymerized dead fines. On the other hand, if a portion of the fines stream would be combined with the product from the last reactor this might cause inhomogenity problems in the final product. Further, if a portion of the fines stream is separately collected and blended with a separate homopolymer as also suggested in US 4,740,550, this leads to complicated and economically unacceptable operation.

### Summary of the Invention

It is an object of the present invention to eliminate the problems related to the prior art of single and multiple-reactor processes and to provide a novel process for preparing copolymers of propylene.

It is another object of the invention to provide a highly versitile process which can be used for preparing a wide range of different copolymer products of propylene.

These and other objects, together with the advantages thereof over known processes, which shall become apparent from specification which follows, are accomplished by the invention as hereinafter described and claimed.

The process according to the present invention is based on a combination of at least one slurry reactor and at least one gas phase reactor connected in series, in that order, to form a cascade, the slurry reactor being a loop reactor or a continuous or simple batch stirred tank reactor. Propylene copolymers are prepared in the presence of a catalyst at an elevated temperature of 60-85°C and a pressure of 30-100 bar. According to the invention, the polymerization product of at least one slurry reactor, containing unreacted monomers, is conducted to the first gas phase reactor with minimum or no recycling of monomer back to the slurry reactor. In connection with the present invention it has been found that impact copolymers of high quality can be produced with a two-stage homopolymerization followed by a impact copolymerization step without any fines removal and circulation either after the first or second stage copolymerization. In the present invention, it is possible to minimize the amount of circulation by using the specific sequence of reactors and by selecting the relative amounts produced in each reactor with that object in mind.

At least 10 % of the polymer product is produced in the gas phase reactor(s).

The residence time in the sturry reactor must be at least 10 min.

More specifically, the process according to the present invention is mainly characterized by what is stated in the characterizing part of claim 1.

The invention achieves a number of considerable advantages. With the present arrangement it has been found that the monomers fed into the first reactor can, to a large extent or fully, be consumed in the gas phase reactor(s) after the slurry reactor. This is possible due to gas phase operation with small amount of gas leaving with the polymer product. The loop reactor dynamics in the cascade provides fast transitions and high productivity. Fast start-ups are also possible because the gas phase bed material is available directly from the loop reactor. With the loop and gas phase reactor cascade it is possible to produce a large variety of different broad molecular weight distribution or bimodal products. The at least one gas phase reactor provides high flexibility in the reaction rate ratio between the first and second part of the product because of adjustable bed level and reaction rate. Further, the gas phase reactor having no solubility limitations makes it possible to produce polymers of high and very high comonomer content.

The loop-gas phase reactor combination have greatly reduced residence times and production losses in comparison to gas phase - gas phase multireactor processes.

### Brief Description of the Drawings

Figure 1 depicts in a schematic fashion the process configuration of a first preferred embodiment of the invention; and
Figure 2 depicts in a schematic fashion the process configuration of a second preferred embodiment of the invention.

### Detailed Description of the Invention

### Definitions

For the purpose of the present invention, "slurry reactor" designates any reactor, such as a continuous or simple stirred tank reactor or loop reactor, operating in bulk or slurry and in which the polymer forms in particulate form. "Bulk" means a polymerization in reaction medium that comprises at least 60 wt-% monomer. According to a preferred embodiment the slurry reactor comprises a bulk loop reactor.

By "gas phase reactor" is meant any mechanically mixed or fluid bed reactor. Preferably the gas phase reactor comprises a mechanically agitated fluid bed reactor with gas velocities of at least 0.2 m/sec.

"High temperature polymerization" stands for polymerization temperatures above a limiting temperature of 80 °C known to be harmful for high yield catalysts of related prior art. At high temperatures the stereospecificity of the catalyst and the morphology of the polymer powder can be lost. This does not take place with the particularly preferred type of catalysts used in the invention which is described below. The high temperature polymerization takes place above the limiting temperature and below the corresponding critical temperature of the reaction medium.

By "direct feed" is meant a process in which the content of a slurry reactor, comprising the polymerization product and the reaction medium, is lead directly to the fluidized bed of a gas phase reactor.

"Reaction zone " stands for one or several reactors of similar type producing the same type or characteristics of polymer connected in the series.

### The overall process

The present invention concerns a multistage process consisting of a bulk reaction zone including at least one slurry reactor, and a gas phase reaction zone including at least one gas phase reactor in cascade after at least one slurry reactor with a minimum or no recycling of monomer back to the first reactor and with direct feed or indirect feed to the gas phase for homo- or copolymerizing propylene.

In the direct feed process the content of the slurry reactor, the polymerization product and reaction medium, is conducted directly to the fluidized bed reactor. The product outlet from the slurry reactor can be discontinuous, or preferably continuous. The slurry is led as such without separation of any gases or particle streams based on different particle size. No particles are recycled to the preceding reactor. Optionally, the line between the slurry reactor and the gas phase reactor can be heated in order to evaporate only a part or all of the reaction medium before it enters the gas phase reactor polymer bed.

The reaction is continued in the gas phase reactor(s). All or practically all (at least about 90 %) of the monomer entering the gas phase from the slurry reactor is part of the reactor gas inventory until it is converted into the polymer.

In two reactor operation the polymer leaving the gas phase reactor with the outlet system enters a solid/gas separation unit. The polymer from the bottom is fed to further processing steps and the gas is compressed and circulated back to the gas phase reactor after purification steps. Typically light inerts, such as methane and ethane, and heavier inerts such as propane and oligomers are removed in these purification steps. The purification can be performed with distillation or membrane separation. In case of distillation the monomers are circulated back to the gas phase reactor mainly as liquid.

In three reactor operation the polymer leaving the 1 st gas phase reactor with the outlet system enters a solid/gas separation unit. The polymer from the bottom is fed further to 2nd gas phase reactor and the gas is compressed and circulated back to the 1 st gas phase reactor after purification steps. Typically light inerts, such as methane and ethane, and heavier inerts such as propane and oligomers are removed in these purification steps. The purification can be performed with distillation or membrane separation. In case of distillation the monomers are circulated back to the gas phase reactor mainly as liquid.

Optionally in three reactor operation the polymer leaving the 1st gas phase reactor with the outlet system enters the 2nd gas phase reactor directly with the accompanying gas.

In three reactor operation the polymer leaving the 2nd gas phase reactor with the outlet system enters a solid/gas separation unit. The polymer from the bottom is fed to further processing steps and the gas is compressed and partly circulated back to the 2nd gas phase reactor directly, partly after purification steps. Typically light inerts, such as methane and ethane, and heavier inerts such as propane and oligomers are removed in these purification steps. The purification can be performed with distillation or membrane separation. In case of distillation an ethylene rich stream is circulated back to the 2nd gas phase reactor and a propylene-propane stream is fed to propane and oligomers removal steps.

The polymerization products are obtained by using a catalyst. The catalyst can be any catalyst providing adequate activity at elevated temperature. The preferred catalyst system used comprises a high yield Ziegler-Natta catalyst having catalyst component, a co-catalyst component, an external donor and, optionally, an internal donor. Another preferred catalyst system is a metallocene-based catalyst, e.g. having a bridged ligand structure giving high stereoselectivity, and which is impregnated on a carrier or support in the form of an activated complex.

The polymerization temperature is 60 to 85 °C. The slurry reactor is operated at elevated pressure at least 30 bar up to 100 bar, and the gas phase reactor(s) at least 10 bar up to dew point pressure. Alternatively any reactor of the reactors in the series can be operated above the critical temperature and pressure.

Propylene and one or more other C₂ to C₁₆ olefins, e.g. ethylene, 1-butene, 4-methyl-1-pentene, 3-methyl-1-butene, 1-hexene, 1-octene, 1-decene, dienes, or cyclic olefins, e.g. vinylcyclohexane or cyclopentene, is subjected to polymerization and copolymerization, respectively, in a plurality of polymerization reactors connected in series. The comonomer olefin(s) can be used in any of the reactors. Different amounts of hydrogen can be used as a molar mass modifier or regulator in any or every reactor.

The desired copolymers of propylene can be recovered from the product separation means of the gas phase reaction zone.

### The catalyst

The polymerization products are obtained by using a catalyst. As catalyst any stereospecific catalyst for propylene can be used, which has high yield and useful polymer properties e.g. isotacticity and morphology at the high temperature and possible supercritical polymerization. The preferred catalyst system used comprises a high yield Ziegler-Natta catalyst having catalyst component, a cocatalyst component, optionally, an external donor and an internal donor. Another preferred catalyst system is a metallocene catalyst having a bridged ligand structure giving high stereoselectivity, and which has an active complex impregnated on a carrier. Finally, the catalyst is preferably any other catalyst providing adequate activity at elevated temperature.

Examples of suitable systems are described in, for example, US Patent 5,234,879, EP 627 449, WO 92/19653, WO 92/19658 and WO 92/19659.

One particularly preferable catalyst, which can be used in the present invention, is disclosed in WO 92/19653. Another preferred catalyst is disclosed in WO 98/12234. Further preferred catalysts are disclosed in WO 97/36938 and WO 97/36939.

### Prepolymerization

The catalyst can be prepolymerized prior to feeding into the first polymerization reactor of the series. During prepolymerization the catalyst components are contacted with a monomer, such as an olefin monomer, before feeding into the reactor. Examples of suitable systems are described in, for example, EP 886 655.

It is also possible to carry out the prepolymerization in the presence of a viscous substance, such as an olefinic wax, to provide a prepolymerized catalyst which is stabile during storage and handling. The catalyst prepolymerized in wax will allow for easy dosing of the catalyst into the polymerization reactors. Examples of suitable systems are described in, for example, EP 607 703. Typically about 1 part of catalyst is used for a maximum of 4 parts of polymer.

The monomer used for prepolymerization can be selected from the group consisting of propylene, 1-butene, 4-methyl-1-pentene, 3-methyl-1-butene, vinylcyclohexane, cyclopentene, 1-hexene, 1-octene, and 1-decene.

The prepolymerization can be performed batchwise in wax or in a continuous prepolymerization reactor or in a continuous plug flow type prepolymerization reactor.

### Polymerization

The invention is based on the combination of at least one slurry reactor and at least one gas phase reactor connected in series, called a cascade.

The equipment of the polymerization step can comprise polymerization reactors of any suitable type. The slurry reactor can be any continuous or simple stirred tank reactor or loop reactor operating in bulk or slurry and the polymer forms in particular form in the reactor. Bulk means a polymerization in reaction medium that comprises of at least 60 % (w/w) monomer. The gas phase reactor can be any mechanically mixed or fluid bed reactor. According to the present invention the slurry reactor is preferably a bulk loop reactor and the gas phase reactor is a fluidized bed type reactor with a mechanical stirrer.

Any reactor in the process can be a super critical polymerization reactor.

The production split between the slurry reactor and the 1st gas phase reactor(s) is 65:35-50:50 when monomer recycling back to the slurry reactor is allowed. In contrast, the production split between the slurry reactor and the gas phase reactor(s) is less than or equal to 50:50 when no recycling back to the slurry reactor is required. In all the cases the production split is more than 10:90. Thus, according to a preferred embodiment, 10 to 50 wt-% of the polymer is prepared in the slurry reaction zone and no monomer is recycled to the slurry reactor zone. When 50 % to 65 % of the polymer is prepared in the slurry reaction zone, a small monomer amount of the monomer has to be recycled to the slurry reactor from the gas phase reaction zone.

According to the invention, the polymerization process comprises at least the following steps of
· subjecting propylene and optionally other olefins to polymerization or copolymerization in a first slurry polymerization zone or reactor,
· recovering the first polymerization product from the first reaction zone with the reaction medium,
· directly or indirecly feeding the first polymerization product into a gas phase polymerization zone or reactor,
· optionally feeding additional propylene and/or comonomer(s) to the second reaction zone,
· subjecting the excess propylene and/or comonomers from 1st zone and additional propylene and/or comonomer(s) to a second polymerization reaction in the presence of the first polymerization product to produce a second polymerization product,
· recovering the polymerization product from second reaction zone, and
· separating and recovering the polypropylene from the second reaction product.

Additionally the process can also comprise one or more of the following additional steps
· prepolymerizing catalyst with one or more monomer(s),
· separating gas from the second reaction zone product,
· feeding the recovered polymerization product of the earlier zones to a third or fourth reaction zone or reactor,
· optionally feeding additional propylene and/or comonomer(s) to the third and fourth reaction zone,
· subjecting the excess propylene and/or comonomer(s) and additional propylene and/or comonomers to third and fourth polymerization reaction in the presence of the polymerization product of the earlier zones to produce a third or fourth polymerization product, and
· recovering the polymerization product from the third or fourth reaction zone, and
· separating and recovering the polypropylene from the third or fourth reaction product.

In the first step of the process, propylene with the optional comonomer(s) together with the activated catalyst complex and optional cocatalyst and other aid components are fed into the first polymerization reactor. The catalyst can be prepolymerized or it is prepolymerized before feeding to the process. Along with the afore-mentioned components hydrogen as a molar mass regulator can be fed into the reactor in the amount required for achieving the desired molar mass of the polymer. In the embodiment of no circulation back to the slurry reactor only fresh monomer is fed into the first reactor.

Alternatively, in the embodiment of minimum recycling of the monomer back to the slurry reactor, the feed of the reactor can consist of the recycled monomer from the following reactor(s), passed through a recovery system, if any, together with added fresh monomer, hydrogen, optional comonomer(s) and catalyst components.

In all of the embodiments the presence of propylene, optional comonomer(s), cocatalyst and other aid components, the activated catalyst complex will polymerize and form a product in particulate form, i.e. polymer particles, which are suspended in the fluid circulated in the reactor.

The polymerization medium typically comprises the monomer and optionally a hydrocarbon, and the fluid is either liquid or gaseous. In the case of slurry reactor, in particular a loop reactor, the fluid is liquid and the suspension of polymer is circulated continuously through the slurry reactor, whereby more suspension of polymer in particle form in hydrocarbon medium or monomer will be produced. According to preferred embodiment, the first polymerization or copolymerization reaction is carried out in a reaction medium mainly consisting propylene. Preferably at least 60 weight percent of the medium is propylene.

The conditions of the slurry reactor are selected so that at least 10 wt-%, preferably at least 12 wt-% of the whole production is polymerised in the first slurry reactor. The temperature is in range of 60 to 85 °C, and even more preferably for homopolymers and high randomness copolymer 75 to 85 °C and for copolymers of high comonomer content 60 to 75 °C. The reaction pressure is in the range of 30 to 100 bar, preferably 35 to 80 bar.

In slurry polymerization zone more than one reactor can be used in series. In such a case the polymer suspension in an inert hydrocarbon or in monomer produced in the 1 st slurry reactor is fed without separation of inert components and monomers periodically or continuously to the following slurry reactor, which acts at lower pressure than the previous slurry reactor.

The polymerization heat is removed by cooling the reactor with a cooling jacket. The residence time in the slurry reactor must be at lest 10 minutes, preferably 20-100 min for obtaining a sufficient degree of polymerization. This is necessary to achieve polymer yields of at least 40 kg PP/g cat. It is also advantageous to operate the slurry reactor with high solid concentrations, e.g. 50 % for homopolymers and 35 or 40 % for some copolymers when the particles are swelling. If the solid concentration in the loop reactor is too low, the amount of reaction medium conducted to the second reaction zone or gas phase reactor is increasing.

The content of the slurry reactor, the polymerization product and reaction medium, is led directly to the next gas phase reactor fluidized bed.

The second reactor is preferably a gas phase reactor, wherein propylene and optionally comonomer(s) are polymerized in reaction medium which consists of gas or vapour.

The gas phase reactor can be an ordinary fluidized bed reactor, although other types of gas phase reactors can be used. In a fluidized bed reactor, the bed consists of the formed and growing polymer particles as well as still active catalyst come along with the polymer fraction. The bed is kept in a fluidized state by introducing gaseous components, e.g. monomer on such flow rate (at least 0.2 m/s) which make the particles act as a fluid. The fluidizing gas can contain also inert gases, like nitrogen and also hydrogen as a modifier. In the invention it is not recommendable to use unnecessary inert gases, which may cause problems in the recovery section.

The gas phase reactor used can be operated in the temperature range of 50 to 115 °C, preferably between 60 and 110 °C and reaction pressure between 10 and 40 bar and the partial pressure of the monomer is preferably between 2 and 30 bar or more, but always below the dew point pressure.

According to one preferred embodiment, no fresh propylene is fed to the first gas phase reactor other than what is required for various flushings.

The pressure of the second polymerization product including the gaseous reaction medium is then reduced after the first gas phase reactor in order to separate part of the gaseous and possible volatile components (e.g. heavy comonomers and compounds used for catalyst feeds) of the product e.g. in a flash tank. The overhead gas stream is recirculated through the recovery system back to the first gas phase reactor or partly to the first gas phase reactor and partly to the slurry reactor. Some of the monomers, typically the heavier comonomers, can be recycled to the bulk reaction zone.

If desired, the polymerization product can be fed into a second gas phase reactor and subjected to a third polymerization reaction to produce a modified polymerization product from which the polypropylene is separated and recovered. The third polymerization reaction is carried out in a gas phase reactor in the presence of comonomers which give the third polymerization product properties, e.g. softness.

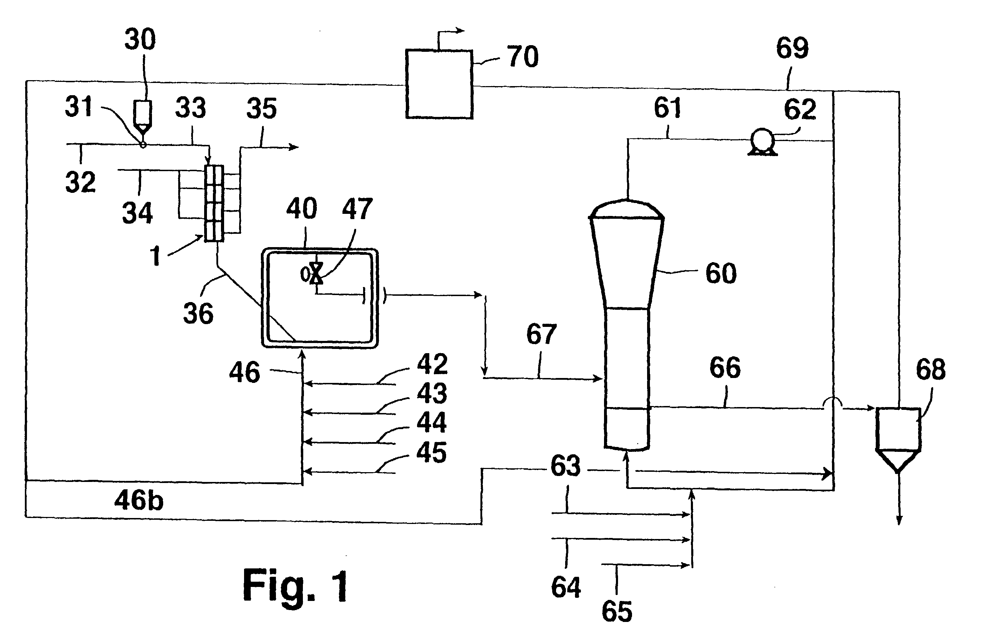

Summarising what has been stated above, one particularly preferred embodiment of the invention comprises (Fig. 1)
- polymerizing propylene in a loop reactor at a pressure of 40 to 80 bar, at a temperature of 80 to 100 °C and hydrogen is used to control the molar mass of the polymerization product,
- recovering the polymerization product from the loop reactor and conducting it to a gas phase reactor fluid bed,
- optionally feeding additional propylene and optional comonomer to the gas phase reactor,
- optionally feeding additional hydrogen to the gas phase reactor to control the hydrogen-to-propylene ratio to provide the desired molecular mass of the polymerization product,
- recovering the polymerization product from the gas phase reactor and conducting it to a flash tank, wherein the pressure of the product is reduced to produce an overhead product containing essentially non-reacted propylene and hydrogen and a bottom product primarily containing polymerized solids,
- recycling the overhead product or at least a major part of it to the gas phase reactor via a recovery section, and
- recovering polypropylene polymer as the bottom product of the flash tank.

According to the second particularly preferred embodiment (Fig. 1):
- propylene and copolymer(s), e.g. ethylene or 1-butene or both, are polymerised in a loop reactor at a pressure of 40 to 80 bar, at a temperature of 60 to 80 °C and hydrogen is used to provide a polymerization product having the desired molar mass,
- the polymerization product from the loop reactor is conducted directly to a gas phase reactor fluid bed,
- optionally additional propylene and comomomer(s) are fed to the gas phase reactor,
- optionally additional hydrogen is fed to the gas phase reactor to control the hydrogen-to-propylene ratio to provide desired molecular mass of the polymerization product,
- the polymerization product is recovered from the gas phase reactor and conducted to a flash tank, wherein the pressure is reduced to produce an overhead product containing essentially non-reacted monomers and hydrogen and a bottom product primarily containing polymerized solids,
- the overhead product or at least a major part of it is recycled to the gas phase reactor via a recovery section, and
- polypropylene polymer is recovered as the bottom product of the flash tank.

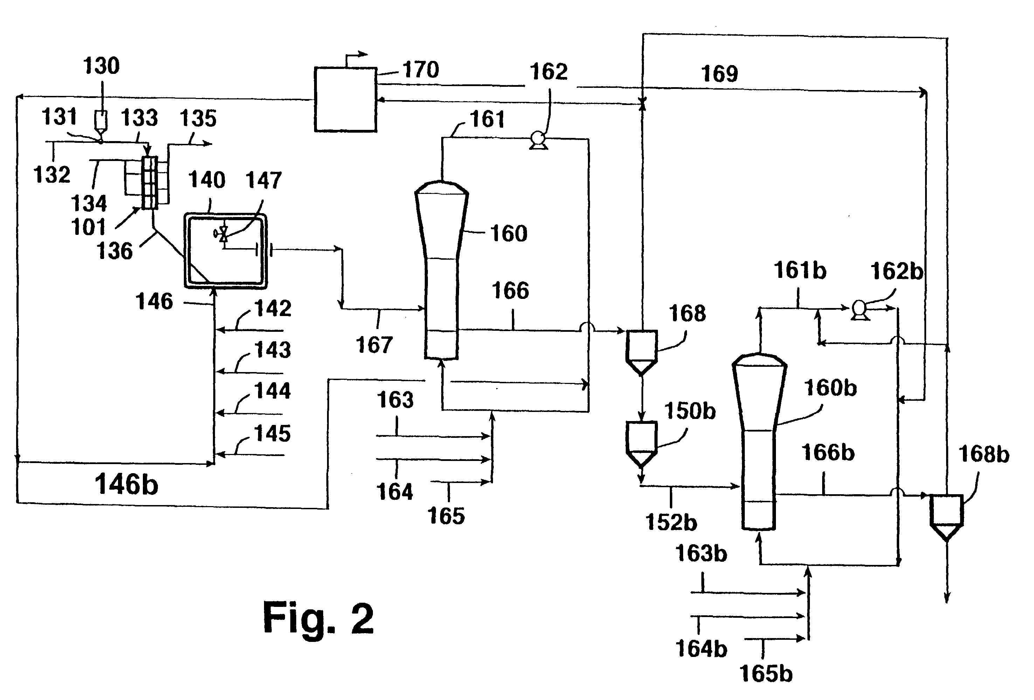

According to the third particularly preferred embodiment (Fig. 2):
- propylene and optionally comonomers are polymerised in a loop reactor at a pressure of 40 to 80 bar, at a temperature of 60 to 100 °C and hydrogen is used to control the molar mass of the polymerization product,
- the polymerization product from the loop reactor is recovered and conducted to a gas phase reactor fluid bed,
- optionally additional propylene and optional comonomer is fed to the gas phase reactor,
- additional hydrogen is optionally fed to the gas phase reactor to control the hydrogen-to-propylene ratio to provide desired molecular mass of the polymerization product,
- the polymerization product from the first gas phase reactor is recovered and conducted to an intermediate flash tank, wherein the pressure of the product is reduced to produce an overhead product containing essentially non-reacted monomer(s) and hydrogen and a bottom product primarily containing polymerised solids,
- the overhead product or at least a major part of it is recycled to the first gas phase reactor via a recovery section,
- the polypropylene polymer from the bottom of the intermediate flash tank is fed to a third polymerization reaction via a polymer feed system,
- the third polymerization reaction is carried out in a gas phase reactor in the presence of comonomers,
- the polymerization product from the second gas phase reactor is recovered and conducted to a flash tank, wherein the pressure of the product is reduced to produce an overhead product containing essentially non-reacted monomer(s) and hydrogen and a bottom product containing primarily polymerised solids,
- optionally the polymerization product from the third polymerization can be conducted directly or via a flash tank to a third (fourth etc.) gas phase polymerization reactor, wherein polymerization is carried out in the presence of comonomers.

These above-mentioned two preferred embodiments are also depicted in the attached drawings, which illustrate the particular configuration of process equipment used. The numerals refer to the following pieces of equipment:
- 1;101: prepolymerization reactor
- 30; 130: catalyst reservoir
- 31; 131: feeding device
- 32; 132: diluent (optional)
- 33; 133: catalyst/diluent mixture
- 34; 134: monomer
- 35; 135: cocatalyst and possible donors
- 40; 140: loop reactor
- 42; 142: diluent feed (optional)
- 43; 143: monomer feed
- 44; 144: hydrogen feed
- 45; 145: comonomer feed (optional)
- 46; 146: back to the loop reactor 40; 140 through the line 46; 146
- 47; 147: one or several exhaust valve
- 150b: flash separator
- 152b: removing line
- 60; 160; 160b: gas phase reactor
- 61; 161; 161b: gas transfer line
- 62; 162; 162b: compressor
- 63; 163; 163b: monomer feed
- 64; 164; 164b: comonomer feed
- 65; 165; 165b: hydrogen feed
- 66; 166; 166b: transfer line
- 67; 167: product transfer line
- 68; 168: polymer product recovery system, e.g. flash tank
- 69; 169: recovery line
- 70; 170: monomer recovery system

Turning to figure 1, it can be noted that catalyst from reservoir 30 is fed to the feeding device 31 together with optional diluent from line 32. The feeding device 31 feeds the catalyst/diluent mixture into the prepolymerization chamber 1 via line 33. Monomer is fed through 34 and cocatalyst and possible donors can be fed into the reactor 1 through conduits 35 or, preferably, the cocatalyst and donor(s) are intermixed and fed in line 35.

From the prepolymerization chamber 1 the prepolymerized catalyst is removed preferably directly through line 36 and transferred to a loop reactor 40. In the loop reactor 40 the polymerization is continued by adding an optional diluent from the line 42, monomer from line 43, hydrogen from line 44 and an optional comonomer from line 45 through the line 46. An optional cocatalyst can also be introduced into the loop reactor 40. From the loop reactor 40 the polymer-hydrocarbon mixture is fed through one or several exhaust valves 47 described in, e.g., FI Patent Nos. 971368 or 971367. There is a direct product transfer 67 from the loop reactor 40 to gas phase reactor 60.

In the lower part of the gas phase reactor 60 there is a fluid bed consisting of polymer particles, which will be kept in a fluidized state in an ordinary way by circulating the gases removed from the top of the reactor 60 though line 61, compressor 62 and a heat exchanger (not presented) to the lower part of the reactor 60 in an ordinary way. The reactor 60 is advantageously, but not necessarily, equipped with a mixer (described in WO 95/01831, not shown in the figure). To the lower part of the reactor 60 can be led in a well known way monomers from line 63, optionally comonomer from line 64 and hydrogen from the line 65. The product will be removed from the reactor 60 continually or periodically through the transfer line 66 to the flash tank 68. The overhead product of the recovery system is circulated to the gas phase reactor via a monomer recovery system.

The embodiment shown in Figure 2 differs from the one in Figure 1 only in the sense that product from gas phase reactor 160 is fed into the additional gas phase reactor 160b. The polymer particles are removed from the flash tank 168 and the polymer feed tank 150b through the removing line 152b to the gas phase reactor 160b. The gas phase reactor is advantageously equipped with a mixer (not shown).

The overhead of the flash separator 168b is recycled partly to the gas phase reactor 160b and partly to the monomer recovery system.

In both of the above presented embodiments, the numerals 70 and 170 signify separation means, such as membrane unit or stripping columns, which are capable of freeing the recycle monomer of the gas phase reactor(s) (60, 160 and 160b) or of the separators (68, 168 and 168b) from hydrogen and/or light inert hydrocarbons typically having a lower boiling point than the monomer(s).

### The polymers

The products produced according to the present invention are polypropylene copolymers including polypropylene terpolymers. In particular, it is possible by means of the present invention to produce high randomness copolymers, which are very soft. The copolymers contain at least 0.5 wt-% of a comonomer, in particular at least about 2 wt-% and preferably up to 20 wt-% of a comonomer. A typical comonomer content is about 2 to 12 wt-%. An essential feature of the invention is the high polymerization temperature used, preferably above 75 °C, which will provide a more even comonomer distribution during copolymerizations. The randomness, measured by FTIR, at a polymerization temperature of 60 °C is 69 %, at 65 °C 71 %, and at a polymerization temperature of 75 °C in the first reactor and 80 °C in the second reactor 74 %.

The following non-limiting examples illustrate the principles of the present invention.

### Example 1

A production scale plant was simulated to produce continuously random PP polymer. The plant comprises catalyst, alkyl, donor, propylene and ethylene feed systems, a prepolymerization reactor, a loop reactor and a fluidized bed gas phase reactor (GPR).

Catalyst, alkyl, donor and propylene were fed to the prepolymerization reactor. The polymer slurry from the prepolymerization reactor was fed to a loop reactor to which also ethylene, hydrogen and more propylene was fed. The polymer slurry from the loop reactor and additional hydrogen, ethylene and propylene were fed to the GPR. The production in the reactors were 300 kg/h in prepolymerization, 15 t/h in loop and 10 t/h in GPR.

The prepolymerization reactor was operated at a pressure of 56 bar and a temperature of 20 °C. The loop reactor was operated at a 55 bar pressure and a 75 °C temperature. The MFR (2.16 kg, 230 °C) of the random-PP produced in the loop was set at 7 by adjusting the hydrogen feed and the ethylene content was set at 3.5 % w/w via ethylene feed.

The GPR was operated at pressure of 35 bar and a temperature of 80 °C. The MFR (2.16 kg, 230 °C) of the random-PP in taken out of the GPR was adjusted to 7 via the partial pressure of hydrogen and ethylene content was adjusted to 3.5 % w/w via the partial pressure of ethylene. 5 t/h of propene and 33 kg/h ethylene were recirculated from the GPR outlet back to the loop reactor. The once-through conversions of propylene and ethylene were 83 % and 96 %, respectively.

### Example 2

A pilot plant operated continuously is used to produce PP-copolymer with good impact and creep properties. The plant comprises a catalyst, alkyl, donor, propylene and ethylene feed systems, a prepolymerization reactor, a loop reactor and 2 fluidized bed gas phase reactors (GPR).

Catalyst, alkyl, donor and propylene are fed to the prepolymerization reactor. The polymer slurry from the prepolymerization reactor is fed to a loop reactor into which also hydrogen, ethylene and additional propylene are fed.

The polymer slurry from the loop reactor and additional hydrogen and propylene are fed to the 1st GPR. The polymer from 1st GPR is fed to 2nd GPR. Ethylene, some hydrogen and additional propylene was fed to the second GPR. The formed polymer and unreacted propylene are separated after removal from the 2nd GPR.

The catalyst used is a highly active and stereospecific ZN-catalyst made according to U.S. Patent No. 5,234,879. The catalyst is contacted with triethylaluminium (TEA) and dicyclopentyldimethoxysilane (DCPDMS) (Al/Ti ratio is 150 and Al/Do 10 (mole)) before feeding to the prepolymerization reactor.

The catalyst is fed according to U.S. Patent No. 5,385,992 and is flushed with propylene to the loop reactor. The prepolymerization reactor is operated at a pressure of 51 bar and a temperature of 20 °C and a mean residence time of the catalyst amounting to 7 min.

The loop reactor is operated at a 50 bar pressure, 75 °C temperature and mean residence time of the catalyst at 1 h. The MFR (2.16 kg, 230 °C) of the PP-randompolymer produced in the loop is controlled to be 7 via hydrogen feed. The ethylene content is controlled to be 3.5 % w/w via ethylene feed.

The polymer slurry from the loop reactor is transferred to the 1st GPR. The 1 st GPR reactor is operated at 29 bar total pressure and 21 bar partial pressure of propylene, 80 °C temperature and mean residence time of the catalyst at 1.5 h. The MFR (2.16 kg, 230 °C) of the PP-randompolymer taken out of the GPR is controlled to be 10 via partial pressure of hydrogen. The ethylene content is controlled to be 2 % w/w via production split between the reactors.

The polymer from the 1 st GPR is transferred to the 2nd GPR. The 2nd GPR reactor is operated at a total pressure of 10 bar and a partial monomer pressure of 7 bar, a temperature of 80 °C and a mean residence time of the catalyst of 1.5 h. The MFR (2.16 kg, 230 °C) of the PP-copolymer taken out of the GPR is adjusted to 7 using partial pressure of hydrogen. The ethylene content is adjusted to 10 % w/w via partial pressure of ethylene and controlling the production split between the reactors.

The desired properties are achieved with a production split comprising 1 % in prepolymerization, 40 % in loop and 40 % in the first GPR and 19 % in the second GPR.

### Example 3

A pilot plant operated continuously was used to produce very soft PP-copolymer. The plant comprises a catalyst, alkyl, donor, propylene and ethylene feed systems, prepolymerization reactor, loop reactor and a fluidized bed gas phase reactor (GPR).

Catalyst, alkyl, donor and propylene was fed to the prepolymerization reactor. The polymer slurry from the prepolymerization reactor was fed to a loop reactor in which also hydrogen, ethylene and additional propylene was fed.

The polymer slurry from the loop reactor and additional ethylene, hydrogen and propylene were fed to the GPR. The formed polymer and unreacted monomers were separated after removal from GPR.

The catalyst used was a highly active and stereospecific ZN-catalyst made according to U.S. Patent 5.234.879. The catalyst was contacted with triethylaluminium (TEA) and dicyclopentyldimethoxysilane (DCPDMS) (Al/Ti ratio was 150 and Al/Do 10 (mole)) before feeding to the prepolymerization reactor.

The catalyst was fed according to U.S. Patent US-5.385.992 and was flushed with propylene to the loop reactor. The prepolymerization reactor was operated at 51 bar pressure, 20 °C temperature and mean residence time of the catalyst at 7 min.

The loop reactor was operated at 50 bar pressure, 75 °C temperature and mean residence time of the catalyst at 1 h. The MFR (2.16 kg, 230 °C) of the PP-randompolymer produced in the loop was controlled to be 4 via hydrogen feed. The ethylene content was controlled to be 3.8 % w/w via ethylene feed.

The polymer slurry from the loop reactor was transferred to the 1 st GPR. The 1st GPR reactor was operated at 29 bar total pressure and 21 bar partial pressure of propylene, 80 °C temperature and mean residence time of the catalyst at 1.2 h. The MFR (2.16 kg, 230 °C) of the PP-randompolymer taken out of the GPR was controlled to be 2.5 via partial pressure of hydrogen. The ethylene content was controlled to be 8 % w/w via production split between the reactors and partial pressure of ethylene.

Desired properties are achieved with a production split of 1 % in prepolymerization, 45 % in loop and 55 % in the GPR.

The polymer from the GPR could have been transferred to another GPR to produce even softer PP copolymer by having even higher partial pressure of ethylene in the 2nd GPR.

### Example 4

A pilot plant operated continuously was used to produce PP-randompolymer. The plant comprises a catalyst, alkyl, donor, propylene and ethylene feed systems, loop reactor and a fluidized bed gas phase reactor (GPR). Said components are fed to the loop reactor. The polymer slurry from the loop reactor and additional hydrogen, propylene and ethylene was fed to GPR. The formed polymer and unreacted propylene where separated after removal from GPR.

The catalyst used was a highly active and stereospecific ZN-catalyst made according to U.S. Patent No. 5,234,879. The catalyst was prepolymerized with propylene (the mass ratio of PP/cat was 10) in batch according to EP 607 703. The prepolymerized catalyst was contacted with triethylaluminium (TEA) and dicyclopentyldimethoxysilane (DCPDMS) (Al/Ti ratio was 140 and Al/Do 10 (mole)) before feeding to the loop reactor.

The catalyst was fed according to US Patent 5,385,992 and was flushed with propylene to the loop reactor. The loop reactor was operated at 50 bar pressure, 75 °C temperature and mean residence time of the catalyst at 1 h. The MFR (2.16 kg, 230 °C) of the PP-randompolymer produced in the loop was controlled to be 4 via hydrogen feed. The ethylene content was controlled to be 3.5 % w/w via ethylene feed.

The polymer slurry from the loop reactor was transferred to the GPR. The GPR reactor was operated at a total pressure of 29 bar and a partial pressure of propylene of 21 bar, a temperature of 80 °C, and a mean residence time of the catalyst of 1.5 h. The MFR (2.16 kg, 230 °C) of the PP-random polymer taken out of the GPR was adjusted to 4 by controlling the partial pressure of the hydrogen. The ethylene content was controlled to be 3.5 % w/w via partial pressure of ethylene. Production split between the reactors was 55 % in loop and 45 % in GPR.

### Example 5

A pilot plant operated continuously was used to produce PP-randompolymer. The plant comprises a catalyst, alkyl, donor, propylene and ethylene feed systems, loop reactor and a fluidized bed gas phase reactor (GPR). Said components are fed to the loop reactor. The polymer slurry from the loop reactor and additional hydrogen and propylene was fed to the GPR. The formed polymer and unreacted propylene where separated after removal from the GPR.

The catalyst used was a highly active and stereospecific ZN-catalyst made according to US Patent No. 5,234,879. The catalyst was prepolymerized with propylene (the mass ratio of PP/cat was 10) in batch according to Finnish Patent No. 95387. The prepolymerized catalyst was contacted with triethylaluminium (TEA) and dicyclopentyldimethoxysilane (DCPDMS) (Al/Ti ratio was 135 and Al/Do 10 (mole)) before feeding to the loop reactor.

The catalyst was fed according to US Patent No. 5,385,992 and was flushed with propylene to the loop reactor. The loop reactor was operated at 50 bar pressure, 75 °C temperature and a mean residence time of the catalyst of 1 h. The MFR (2.16 kg, 230 °C) of the PP-randompolymer produced in the loop was set at 0.2 via hydrogen feed. The ethylene content was adjusted to 3.5 % w/w via ethylene feed.

The polymer slurry from the loop reactor was transferred to the GPR. The GPR reactor was operated at 29 bar total pressure and 21 bar partial pressure of propylene, 80 °C temperature and mean residence time of the catalyst at 1.5 h. The MFR (2.16 kg, 230 °C) of the PP-random polymer taken out of the GPR was controlled to be 3 via partial pressure of hydrogen. The ethylene content was controlled to be 1.8 % w/w via production split between the reactors. Desired ethylene content was acchieved by using a production split of 40 % in loop and 60 % in GPR.

## Claims

1. A process for preparing propylene copolymers, which comprises the steps of
- polymerizing propylene with comonomers in the presence of a catalyst at an elevated temperature of 60 to 85°C and at a pressure of 30 to 100 bar in at least one slurry reactor for at least 10 minutes, selected from a loop reactor and a continuous or simple batch stirred tank reactor and at least one gas phase reactor, at least 10 % of the polymer product being produced in the gas phase reactor(s),
- recovering from the slurry reactor a copolymerization product containing unreacted monomers and
- conducting the copolymerization product to a first gas phase reactor without recycling of the unreacted monomers to the slurry reactor before the gas phase reactor.

2. The process according to claim 1, wherein the polymerization product of the slurry reactor comprises polymeric substances selected from the group consisting of polypropylene, propylene copolymers and mixtures of polypropylene and propylene copolymers.

3. The process according to claim 1 or 2, wherein the comonomer is selected from the group of C₂ to C₁₆ olefins.

4. The process according to claim 3, wherein the comonomer is selected from the group of ethylene, 1-butene, 4-methyl-1-pentene, 3-methyl-1-butene, 1-hexene, 1-octene, 1-decene, dienes, vinylcyclohexane and cyclopentene.

5. The process according to any of the preceding claims, wherein the slurry reactor comprises a loop reactor and wherein the concentration of propylene and the comonomer in the reaction medium of the loop reactor is maintained in excess of 60 wt-% for forming a product in particulate form.

6. The process according to any of claims 1 to 5 for preparing random and terpolymers, wherein the slurry reactor is operated at a temperature in the range of 60 to 75 °C

7. The process according to any of claims 1 to 5, wherein the slurry reactor is operated at a temperature in the range of 75 to 85 °C for improved activity and comonomer randomness.

8. The process according to any of claims 1 to 7, wherein the slurry reactor is operated at a pressure in the range of 35 to 100 bar.

9. The process according to any of claims 1 to 8, wherein the catalyst is selected from the group consisting of Ziegler-Natta catalysts and metallocene catalysts.

10. The process according to any of the preceding claims, wherein the reaction medium of the polymerization product is evaporated before the polymerization product is fed into a first gas phase reactor.

11. The process according to claim 10, wherein the polymerization product is conducted from the slurry reactor to the first gas phase reactor via a jacketed pipe line heated by steam for providing at least a part of the energy needed for evaporation of the reaction medium.

12. The process according to any of the preceding claims, wherein polymerization in the slurry reactor is continued until a copolymer comprising > 0.5 wt-% of at least one comonomer is obtained, and feeding the copolymer into the first gas phase reactor.

13. The process according to claim 12, wherein the polymerization product fed to the first gas phase reactor contains copolymers comprising 2 to 16 wt-% of at least one comonomer.

14. The process according to claim 12, wherein the polymerization product is copolymerized in the first gas phase reactor with additional comonomers to increase the comonomer content.

15. The process according to claim 12, wherein copolymerization is continued in the gas phase reactor until the comonomer content of the copolymer is up to 20 wt-%.

16. The process according to any of claims 1 to 12, wherein polymerization in the first gas phase reactor is carried out without additional monomer feed.

17. The process according to any one of the preceding claims, wherein a polymerization product is recovered from the gas phase reactor.

18. The process according to claim 17, wherein the polymerization product is subjected to copolymerization in the presence of comonomers to provide a first modified polymer with improved softness properties.

19. The process according to claim 18, wherein the copolymerization is carried out in a second gas phase reactor arranged in series with the first gas phase reactor.

20. The process according to claim 18, wherein the first modified polymer is subjected to a least one further copolymerization reaction in at least one further reactor.

21. The process according to any of the preceding claims, wherein at least part of the unreacted monomers are recovered from the second and/or third gas phase reactor and recycled back to the previous gas phase reactor(s).

22. The process according to any of the preceding claims, wherein the unreacted monomers recovered from the first gas phase reactor are recycled back to the gas phase reactor.

23. The process according to any of the preceding claims, wherein a part of the unreacted monomers recovered from a gas phase reactor and recycled back to a slurry reactor.

24. The process according to claim 23, wherein the amount of monomers recycled comprises 1 to 50 wt-% of the amount of monomers in the feed of the slurry reactor.

25. The process according to any of the preceding claims, wherein the production rate of the slurry reactor is 10 to 50 wt-%, preferably less than 50 %, of the total production rate of the slurry and the first gas phase reactor.

26. The process according to any of the preceding claims, wherein hydrogen is used in at least one reactor as a molar mass modifier.

27. The process according to any of the preceding claims, wherein the catalyst used is prepolymerized before feeding it into the process.

28. A process for preparing propylene copolymers, which comprises the steps of
- subjecting propylene with comonomers to polymerization in the presence of a catalyst at a temperature in the range of 60 to 85°C and at an elevated pressure in at least one slurry reactor to produce a first copolymerization product comprising a propylene copolymer and unreacted monomers,
- recovering the copolymer and the unreacted monomers,
- feeding the copolymer to at least one gas phase reactor,
- feeding all of the unreacted monomers to said gas phase reactor,
- subjecting the copolymer and the unreacted monomers to polymerization in said gas phase reactor to produce a second copolymerization product containing propylene polymer and gaseous substances, and
- recovering the propylene copolymer,
wherein the production rate of the loop reactor is 10 to 50 wt-% of the total production rate of the loop and the first gas phase reactor and wherein hydrogen is used in at least one reactor as a molar mass modifier.

29. The process according to claim 28, wherein the propylene polymer is fed to a further gas phase reactor for copolymerization.

30. The process according to claim 28 or claim 29, wherein the polymerization in said gas phase reactor is carried out essentially without additional feed of monomers.

## Patentansprüche

1. Verfahren zur Herstellung von Propylencopolymeren, das die Stufen aufweist:
- Polymerisieren von Propylen mit Comonomeren in Gegenwart eines Katalysators bei einer erhöhten Temperatur von 60 bis 85°C und bei einem Druck von 30
- 100 bar in mindestens einem Aufschlämmungsreaktor für mindestens 10 Minuten, der aus einem Schleifenreaktor und einem kontinuierlichen oder diskontinuierlichen gerührten Tankreaktor gewählt ist, und mindestens einem Gasphasenreaktor, wobei mindestens 10 % des Polymerprodukts in dem (den) Gasphasenreaktor(en) hergestellt werden,
- Gewinnen eines Copolymerisationsprodukts, das nicht umgesetzte Monomere enthält, aus dem Aufschlämmungsreaktor und
- Zuführen des Copolymerisationsprodukts in einen ersten Gasphasenreaktor ohne Zurückführen der nicht umgesetzten Monomere in den Aufschlämmungsreaktor vor dem Gasphasenreaktor.

2. Verfahren nach Anspruch 1, worin das Polymerisationsprodukt des Aufschlämmungsreaktors polymere Substanzen umfasst, die aus der Gruppe gewählt sind, die aus Polypropylen, Propylencopolymeren und Mischungen aus Polypropylen und Propylencopolymeren besteht.

3. Verfahren nach Anspruch 1 oder 2, worin das Comonomer aus der Gruppe C₂ - C₁₆-Olefine gewählt wird.

4. verfahren nach Anspruch 3, worin das Comonomer aus der Gruppe Ethylen, 1-Buten, 4-Methyl-1-penten, 3-Methyl-1-buten, 1-Hexen, 1-Octen, 1-Decen, Diene, Vinylcyclohexan und Cyclopenten gewählt wird.

5. Verfahren nach einem der vorangegangenen Ansprüche, worin der Aufschlämmungsreaktor einen Schleifenreaktor umfasst und worin die Konzentration des Propylens und des Comonomers im Reaktionsmedium des Schleifenreaktor im überschuss von 60 Gew-% zur Bildung eines Produkts in Teilchenform gehalten wird.

6. Verfahren nach einem der Ansprüche 1 bis 5 zur Herstellung von statistischen Polymeren und Terpolymeren, worin der Aufschlämmungsreaktor bei einer Temperatur im Bereich von 60 - 75°C betrieben wird.

7. Verfahren nach einem der Ansprüche 1 bis 5, worin der Aufschlämmungsreaktor bei einer Temperatur im Bereich von 75 - 85°C für eine verbesserte Aktivität und Comonomerregellosigkeit betrieben wird.

8. Verfahren nach einem der Ansprüche 1 bis 7, worin der Aufschlämmungsreaktor bei einem Druck im Bereich von 35 bis 100 bar betrieben wird.

9. Verfahren nach einem der Ansprüche 1 bis 8, worin der Katalysator aus der Gruppe gewählt wird, die aus Ziegler-Natta-Katalysatoren und Metallocenkatalysatoren besteht.

10. Verfahren nach einem der vorangegangenen Ansprüche, worin das Reaktionsmedium des Polymerisationsprodukts verdampft wird, bevor das Polymerisationsprodukt in einen ersten Gasphasenreaktor eingegebenen wird.

11. Verfahren nach Anspruch 10, worin das Polymerisationsprodukt vom Aufschlämmungsreaktor in den ersten Gasphasenreaktor über eine Mantelleitung, die durch Dampf erhitzt wird, um mindestens einen Teil der Energie, die für die Verdampfung des Reaktionsmediums benötigt wird, zur Verfügung zu stellen, geführt wird.

12. verfahren nach einem der vorangegangenen Ansprüche, worin die Polymerisation im Aufschlämmungsreaktor fortgesetzt wird, bis ein Copolymer, das >0,5 Gew-% von mindestens einem Comonomer umfasst, erhalten wird und das Copolymer in den ersten Gasphasenreaktor eingegeben wird.

13. Verfahren nach Anspruch 12, worin das Polymerisationsprodukt, das in den ersten Gasphasenreaktor eingegeben wird, Copolymere, die 2 bis 16 Gew-% von mindestens einem Comonomer umfassen, enthält.

14. Verfahren nach Anspruch 12, worin das Polymerisationsprodukt im ersten Gasphasenreaktor mit zusätzlichen Comonomeren copolymerisiert wird, um den Comonomergehalt zu erhöhen.

15. Verfahren nach Anspruch 12, worin die Copolymerisation im Gasphasenreaktor fortgesetzt wird, bis der Comonomergehalt des Copolymers bis zu 20 Gew-% beträgt.

16. Verfahren nach einem der Ansprüche 1 bis 12, worin die Polymerisation im ersten Gasphasenreaktor ohne weitere Monomermaterialzugabe durchgeführt wird.

17. Verfahren nach einem der vorangegangenen Ansprüche, worin ein Polymerisationsprodukt aus dem Gasphasenreaktor gewonnen wird.

18. Verfahren nach Anspruch 17, worin das Polymerisationsprodukt in Gegenwart von Comonomeren copolymerisiert wird, um ein erstes modifiziertes Polymer mit verbesserten Weichheitseigenschaften zur Verfügung zu stellen.

19. Verfahren nach Anspruch 18, worin die Copolymerisation in einem zweiten Gasphasenreaktor, der in Serie mit dem ersten Gasphasenreaktor angeordnet ist, durchgeführt wird.

20. Verfahren nach Anspruch 18, worin das erste modifizierte Polymer mindestes einer weiteren Copolymerisationsaktion in mindestens einem weiteren Reaktor unterworfen wird.

21. Verfahren nach einem der vorangegangen Ansprüche, worin mindestens ein Teil der nicht umgesetzten Monomere aus dem zweiten und/oder dritten Gasphasenreaktor gewonnen wird und in den (die) vorherigen Gasphasenreaktor(en) zurückgeführt wird.

22. Verfahren nach einem der vorangegangenen Ansprüche, worin die nicht umgesetzten Monomere, die aus dem ersten Gashasenreaktor gewonnen werden, in den Gasphasenreaktor zurückgeführt werden.

23. Verfahren nach einem der vorangegangenen Ansprüche, worin ein Teil der nicht umgesetzten Monomere, die aus einem Gasphasenreaktor gewonnen wird, in einen Aufschlämmungsreaktor zurückgeführt wird.

24. Verfahren nach Anspruch 23, worin die Menge der zurückgeführten Monomere 1 bis 50 Gew-% der Menge der Monomere im Einsatzmaterial des Aufsehlämmungsreaktors umfassen.

25. Verfahren nach einem der vorangegangenen Ansprüche, worin die Herstellungsrate des Autschlämmungsreaktors 10 bis 50 Gew-%, bevorzugt weniger als 50 Gew-%, der gesamten Produktionsrate des Aufschlämmungsreaktors und des ersten Gasphasenreaktors beträgt.

26. verfahren nach einem der vorangegangenen Ansprüche, worin Wasserstoff in mindestens einem Reaktor als Molmassenmodifikator verwendet wird.

27. Verfahren nach einem der vorangegangenen Ansprüche, worin der verwendete Katalysator vor seiner Zugabe in das Verfahren vorpolymerisiert wird.

28. verfahren zur Herstellung von Propylencomonomeren, das die Stufen aufweist:
- Polymerisieren von Propylen mit Comonomeren in Gegenwart eines Katalysators bei einer Temperatur im Bereich von 60 bis 85°C und bei einem erhöhten Druck in mindestens einem Aufschlämmungsreaktor, um ein erstes Copolymersationsprodukt herzustellen, das ein Propylencopolymer und nicht umgesetzte Monomere umfasst,
- Gewinnen des Copolymers und der nicht umgesetzten Monomere,
- Zuführen des Copolymers in mindestens einen Gasphasenreaktor,
- Zuführen aller nicht umgesetzter Monomere in den Gasphasenreaktor,
- Polymerisieren des Copolymers und des nicht umgesetzten Monomers in dem Gasphasenreaktor, um ein zweites Copolymerisationsprodukt, das ein Propylenpolymer und gasförmige Substanzen enthält, herzustellen und
- Gewinnen des Propylencopolymers,
worin die Herstellungsrate des Schleifenreaktors 10 bis 50 Gew-% der gesamten Herstellungsrate des Schleifenreaktors und des ersten Gasphasenreaktors beträgt und worin Wasserstoff in mindestens einem Reaktor als Molmassenmodifikator verwendet wird.

29. verfahren nach Anspruch 28, worin das Propylenpolymer in einen weiteren Gasphasenreaktor für die Copolymerisation geleitet wird.

30. Verfahren nach Anspruch 28 oder 29, worin die Polymerisation in dem Gasphasenreaktor im wesentlichen ohne zusätzliche Materialzugabe von Monomeren durchgeführt wird.

## Revendications

1. Procédé de préparation de copolymères de propylène, qui comprend les étapes consistant à :
- polymériser du propylène avec des comonomères en présence d'un catalyseur à une température élevée de 60 à 85°C et à une pression de 30 à 100 bars dans au moins un réacteur à mélange en suspension pendant au moins 10 minutes, choisi parmi un réacteur en boucle et un réacteur à agitation en fonctionnement continu ou par lot simple et dans au moins un réacteur en phase gazeuse, au moins 10% du produit polymère étant produits dans le(s) réacteur(s) en phase gazeuse,
- récupérer à partir du réacteur à mélange en suspension, un produit de copolymérisation contenant des monomères qui n'ont pas réagi et
- conduire le produit de copolymérisation vers un premier réacteur en phase gazeuse sans recycler les monomères qui n'ont pas réagi dans le réacteur à mélange en suspension avant le réacteur en phase gazeuse.

2. Procédé selon la revendication 1, dans lequel le produit de polymérisation du réacteur à mélange en suspension comprend des substances polymères choisies parmi le groupe consistant en les copolymères de polypropylène, de propylène et les mélanges de copolymères de polypropylène et de propylène.

3. Procédé selon la revendication 1 ou 2, dans lequel le comonomère est choisi parmi le groupe des oléfines en C₂ à C₁₆.

4. Procédé selon la revendication 3, dans lequel le comonomère est choisi parmi le groupe de l'éthylène, du 1-butène, du 4-méthyl-1-pentène, du 3-méthyl-1-butène, du 1-hexène, du 1-octène, du 1-décène, des diènes, du vinylcyclohexane et du cyclopentène.

5. Procédé selon l'une quelconque des revendications précédentes, dans lequel le réacteur à mélange en suspension comprend un réacteur en boucle et
dans lequel la concentration de propylène et de comonomère dans le milieu réactionnel du réacteur en boucle est maintenue dans un excès de 60% en poids pour former un produit sous forme particulaire.

6. Procédé selon l'une quelconque des revendications 1 à 5 de préparation de polymères aléatoires et de terpolymères, dans lequel le réacteur à mélange en suspension fonctionne à une température se situant dans la plage de 60 à 75°C.

7. Procédé selon l'une quelconque des revendications 1 à 5, dans lequel le réacteur à mélange en suspension fonctionne à une température se situant dans la plage de 75 à 85°C pour une activité améliorée et un caractère aléatoire du comonomère.

8. Procédé selon l'une quelconque des revendications 1 à 7, dans lequel le réacteur à mélange en suspension fonctionne à une pression se situant dans la plage de 35 à 100 bars.

9. Procédé selon l'une quelconque des revendications 1 à 8, dans lequel le catalyseur est choisi parmi le groupe constitué des catalyseurs de Ziegler-Natta et des catalyseurs de métallocènes.

10. Procédé selon l'une quelconque des revendications précédentes, dans lequel le milieu réactionnel du produit de polymérisation est évaporé avant que le produit de polymérisation soit chargé dans un premier réacteur en phase gazeuse.

11. Procédé selon la revendication 10, dans lequel le produit de polymérisation est conduit du réacteur à mélange en suspension vers le premier réacteur en phase gazeuse via un conduit chemisé chauffé avec de la vapeur pour fournir au moins une partie de l'énergie nécessaire à l'évaporation du milieu réactionnel.

12. Procédé selon l'une quelconque des revendications précédentes, dans lequel la polymérisation dans le réacteur à mélange en suspension est poursuivie jusqu'à ce qu'un copolymère comprenant > 0,5% en poids d'au moins un comonomère soit obtenu et le chargement du copolymère dans le premier réacteur en phase gazeuse.

13. Procédé selon la revendication 12, dans lequel le produit de polymérisation chargé dans le premier réacteur en phase gazeuse contient des copolymères comprenant de 2 à 6% en poids d'au moins un comonomère.

14. Procédé selon la revendication 12, dans lequel le produit de polymérisation est copolymérisé dans le premier réacteur en phase gazeuse avec d'autres comonomères pour augmenter la teneur en comonomères.

15. Procédé selon la revendication 12, dans lequel la copolymérisation est poursuivie dans le réacteur en phase gazeuse jusqu'à ce que la teneur en comonomères du copolymère atteigne jusqu'à 20% en poids.

16. Procédé selon l'une quelconque des revendications 1 à 12, dans lequel la polymérisation dans le premier réacteur en phase gazeuse est réalisée sans alimentation en monomères supplémentaire.

17. Procédé selon l'une quelconque des revendications précédentes, dans lequel un produit de polymérisation est récupéré à partir du réacteur en phase gazeuse.

18. Procédé selon la revendication 17, dans lequel le produit de polymérisation est soumis à une copolymérisation en présence de comonomères pour fournir un premier polymère modifié avec des propriétés de souplesse améliorées.

19. Procédé selon la revendication 18, dans lequel la copolymérisation est réalisée dans un second réacteur en phase gazeuse disposé en série avec le premier réacteur en phase gazeuse.

20. Procédé selon la revendication 18, dans lequel le premier polymère modifié est soumis à au moins une autre réaction de copolymérisation dans au moins un autre réacteur.

21. Procédé selon l'une quelconque des revendications précédentes, dans lequel au moins une partie des monomères qui n'ont pas réagi est récupérée à partir du deuxième et/ou du troisième réacteur en phase gazeuse et recyclée vers le(s) réacteur(s) en phase gazeuse précédent(s).

22. Procédé selon l'une quelconque des revendications précédentes, dans lequel les monomères qui n'ont pas réagi, récupérés à partir du premier réacteur en phase gazeuse, sont recyclés vers le réacteur en phase gazeuse.

23. Procédé selon l'une quelconque des revendications précédentes, dans lequel une partie des monomères qui n'ont pas réagi est récupérée à partir d'un réacteur en phase gazeuse et recyclée vers un réacteur à mélange en suspension.

24. Procédé selon la revendication 23, dans lequel la quantité de monomères recyclés comprend de 1 à 50% en poids de la quantité de monomères présents dans le chargement du réacteur à mélange en suspension.

25. Procédé selon l'une quelconque des revendications précédentes, dans lequel le taux de production du réacteur à mélange en suspension est de 10 à 50% en poids, de préférence inférieur à 50%, du taux de production totale du réacteur à mélange en suspension et du premier réacteur en phase gazeuse.

26. Procédé selon l'une quelconque des revendications précédentes, dans lequel de l'hydrogène est utilisé dans au moins un réacteur en tant que modificateur de la masse molaire.

27. Procédé selon l'une quelconque des revendications précédentes, dans lequel le catalyseur utilisé est prépolymérisé avant son chargement dans le procédé.

28. Procédé de préparation de copolymères de propylène, qui comprend les étapes consistant à :
- soumettre du propylène avec des comonomères à une polymérisation en présence d'un catalyseur à une température se situant dans la plage de 60 à 85°C et à une pression élevée dans au moins un réacteur à mélange en suspension pour produire un premier produit de copolymérisation comprenant un copolymère de propylène et des monomères qui n'ont pas réagi,
- récupérer le copolymère et les monomères qui n'ont pas réagi,
- charger le copolymère dans au moins un réacteur en phase gazeuse,
- charger tous les monomères qui n'ont pas réagi dans ledit réacteur en phase gazeuse,
- soumettre le copolymère et les monomères qui n'ont pas réagi à une polymérisation dans ledit réacteur en phase gazeuse pour produire un second produit de copolymérisation contenant du polymère de propylène et des substances gazeuses et
- récupérer le copolymère de propylène,
dans lequel le taux de production du réacteur en boucle est de 10 à 50% en poids du taux de production totale du réacteur en boucle et du premier réacteur en phase gazeuse et dans lequel de l'hydrogène est utilisé dans au moins un réacteur en tant que modificateur de la masse molaire.

29. Procédé selon la revendication 28, dans lequel le polymère de propylène est chargé dans un autre réacteur en phase gazeuse pour une copolymérisation.

30. Procédé selon la revendication 28 ou la revendication 29, dans lequel la polymérisation dans ledit réacteur en phase gazeuse est réalisée essentiellement sans chargement supplémentaire de monomères.
